# EUROPÄISCHE PATENTSCHRIFT

(11) **EP 3 116 705 B1**
(45) Veröffentlichungstag und Bekanntmachung des Hinweises auf die Patenterteilung: **22.04.2020**
(21) Anmeldenummer: 15708499.7
(22) Anmeldetag: 05.03.2015
(51) Int. Cl.: B29C 65/56, B21J 15/02, B29C 65/64, B29K 105/06, B29K 101/12, B29K 101/10, B29K 307/04, B29K 309/08, B29K 277/00

(54) **VERFAHREN ZUM VERBINDEN VON BAUTEILEN VON DENEN EINES AUS EINEM FASERVERSTÄRKTEN KUNSTSTOFF BESTEHT**
METHOD FOR CONNECTING COMPONENTS ONE OF WHICH IS MADE OF A FIBER-REINFORCED PLASTIC MATERIAL
PROCÉDÉ DE LIAISON DE COMPOSANTS DONT L'UN MOINS EST EN UNE MATIÈRE PLASTIQUE RENFORCÉE PAR DES FIBRES

(30) Priorität: 11.03.2014 DE 102014204449
(43) Veröffentlichungstag der Anmeldung: 18.01.2017
(73) Patentinhaber: EJOT GmbH & Co. KG, 57319 Bad Berleburg (DE)
(72) Erfinder: KITTEL, Dieter, 57334 Bad Laasphe (DE)
(74) Vertreter: DREISS Patentanwälte PartG mbB
(86) Internationale Anmeldenummer: PCT/EP2015/054596
(87) Internationale Veröffentlichungsnummer: WO 2015/135824

(56) Entgegenhaltungen:
- WO-A2-93/02850
- JP-A- 2013 148 122
- US-A- 5 354 160

## Beschreibung

Die Erfindung betrifft ein Verfahren zum Verbinden von zwei Bauteilen, von denen mindestens eines aus einem faserverstärkten Kunststoff besteht. Faserverstärkte Kunststoffe sind aufgrund des günstigen Verhältnisses von Festigkeit zum Gewicht ein wesentlicher Erfolgsfaktor bei der Realisierung von sehr leichten und trotzdem sehr belastbaren Strukturen.

Aus diesen Gründen sind sie im Flugzeugbau, beim Bau von Kraftfahrzeugen und in anderen Bereichen des Leichtbaus seit Jahren auf dem Vormarsch.

Im Zusammenhang mit der beanspruchten Erfindung wird der Begriff "faserverstärkter Kunststoff" sehr weit gefasst. Er beinhaltet in jedem Fall eine Matrix, die aus einem Duroplast oder einem thermoplastischen Kunststoff bestehen kann. In diese Matrix sind Fasern, seien es einzelne Fasern, Fasergewebe oder Fasergelege, eingebettet. Häufig verwendete Faserwerkstoffe sind Kohlenstoff (Carbon, CFK), Glas oder Aramid.

Entsprechend den im Betrieb des Bauteils auftretenden Belastungen werden die Fasern so innerhalb der Matrix angeordnet und ausgerichtet, dass sich bei geringstem Gewicht sehr leistungsfähige Bauteile ergeben.

Ein wichtiger Vorteil einer thermoplastischen Matrix von faserverstärkten Kunststoffen ist darin zu sehen, dass diese durch Warmumformen formgebend bearbeitet werden können. Plattenförmige faserverstärkte Kunststoffe mit thermoplastischer Matrix werden auch als "Organoblech" bezeichnet und fallen im Sinne der beanspruchten Erfindung auch unter den Begriff "faserverstärkter Kunststoff".

Bei nahezu allen Produkten ist das Fügen von zwei oder mehreren gleichartigen oder verschiedenartigen Bauteilen eine wichtige Aufgabe.

Wenn man zwei Bauteile aus einem Faserverbundwerkstoff mit Kohlefasern (nachfolgend als CFK bezeichnet) auf herkömmliche Weise, zum Beispiel durch Schrauben oder Niete, miteinander verbindet, tritt aufgrund der Stellung von Graphit in der elektrochemischen Spannungsreihe Kontaktkorrosion auf, was nicht akzeptabel ist, weil die Verbindung dann nur eine kurze Lebensdauer hat. Der in den Kohlefasern enthaltene Graphit verhält sich korrosionstechnisch wie ein relativ edler metallischer Werkstoff, so dass Bauteile aus CFK nicht mit Verbindungselementen (Niete oder Schrauben) aus unedlen Metallen, wie Stahl oder Aluminium, gefügt bzw. verbunden werden können. Wenn Verbindungselemente aus unedlen Metallen für diesen Zweck eingesetzt werden, tritt nach kurzer Zeit Korrosion auf.

Im Flugzeugbau hat man sich damit beholfen, dass CFK-Bauteile durch Schrauben oder Niete aus Titanlegierungen verbunden werden, wobei die Titanlegierungen nur eine geringe Potenzialdifferenz zu Graphit aufweisen. Dieser Weg ist jedoch unter Anderem aus Kostengründen in vielen Bereichen, wie zum Beispiel der Automobilindustrie, nicht gangbar.

Aus der US 5,354,160 und der WO 93/02850 sind Verfahren zum Fügen von zwei Bauteilen bekannt, die einen Dom aus faserverstärktem Kunststoff verwenden. Dieser Dom weist einen Zuganker auf, mit dessen Hilfe ein Kopf des Doms und die zu fügenden Bauteile in axialer Richtung des Doms miteinander verspannt werden. In diesem Zustand wird auf einen durch die Bohrungen der zu fügenden Bauteile hinausragender zylindrischer Teil des Doms durch ein rotierendes Werkzeug erwärmt und plastisch verformbar gemacht. Sobald eine ausreichende Plastizität erreicht ist, endet die Rotation des Werkzeugs und das Werkzeug wird in axialer Richtung auf die zu fügenden Bauteile hinzubewegt. Dadurch wird ein Bund an dem Dom ausgebildet. Anschließend wird der Zuganker des Doms abgetrennt.

Der Erfindung liegt die Aufgabe zu Grunde, ein Verfahren zum Fügen beziehungsweise Verbinden von mindestens zwei Bauteilen bereitzustellen, welches sowohl kostengünstig als auch prozesssicher ist und außerdem die Gefahr von Kontaktkorrosion eliminiert, wobei mindestens ein Bauteil aus einem faserverstärkten Kunststoff besteht.

Diese Aufgabe wird erfindungsgemäß gelöst durch ein Verfahren nach dem nebengeordneten Anspruch 1 und einer Baugruppe umfassend mindestens zwei Bauteile gemäß dem nebengeordneten Anspruch 5.

Das erfindungsgemäße Verfahren zum Fügen von mindestens zwei Bauteilen, wobei mindestens ein Bauteil aus einem faserverstärkten Kunststoff besteht, umfasst das Fügen der mindestens zwei Bauteile mittels formschlüssiger Verbindung durch einen rotationssymmetrischen Dom, aus einem gefüllten Kunststoff, bevorzugt aus glasfaserverstärktem Polyamid oder Polypropylen, der in Rotation oder Oszillation versetzt wird und unter Aufbringung einer Axialkraft in die Bauteile eingebracht wird.

Durch das erfindungsgemäße Füge-Verfahren ist es möglich, den Dom durch Reibung an den zu fügenden Bauteilen zu erwärmen und teilweise aufzuschmelzen. Gleichzeitig bleibt ein Kern des Doms so fest, dass der Dom den Bauraum, den er benötigt, in einem Setzvorgang (durch Aufbringen einer ausreichenden Axialkraft) selbst erzeugt. Nachdem der Dom in den zu verbindenden Bauteilen seine Endposition erreicht hat, verschweißt die aufgeschmolzene Materialzugabe des Doms mit mindestens einem der zu verbindenden Bauteile, so dass nach dem anschließenden Abkühlen der Fügestellen eine belastbare nichtmetallische Verbindung zwischen den Bauteilen hergestellt ist.

Es ist möglich, den Dom in eine gleichmäßige Drehung zu versetzen oder den Dom in kurze Drehbewegungen mit wechselnden Drehrichtungen zu versetzen. Diese Alternativen werden als Rotation und Oszillation bezeichnet. Das erfindungsgemäße Füge-Verfahren ist nicht auf diese explizit genannten Relativbewegungen zwischen Dom und den zu fügenden Bauteilen beschränkt. Es können vielmehr auch andere Relativbewegungen, wie zum Beispiel kleine kreisende Bewegungen des Doms, oder Kombinationen solcher Bewegungen eingesetzt werden.

Das erfindungsgemäße Fügen hat Gemeinsamkeiten mit dem herkömmlichen Reibschweißen. Ein wesentlicher Unterschied besteht darin, dass der Dom die Schweißzugabe liefert und der nicht aufgeschmolzene Teil des Doms ein Verbindungselement ist.

Das erfindungsgemäße Verfahren ist technisch gut zu beherrschen, da die Steuerung von Rotation oder Oszillation, der Anpresskraft und der Axialbewegungen des Doms mit NC-Steuerungen reproduzierbar erfolgen kann. Aufgrund seiner Gemeinsamkeiten mit dem Reibschweißen als etablierte Fügemethode können Vorrichtungen und Steuerungen zum Reibschweißen mit gewissen Modifikationen für das erfindungsgemäße Verfahren ertüchtigt werden.

Es versteht sich von selbst, dass aufgrund der deutlich anderen Werkstoffeigenschaften sowohl der zu verbindenden Bauteile als auch des Doms aus Kunststoff die Prozessparameter wie Rotationsgeschwindigkeit des Doms, Vorschubkraft während der Rotation oder Oszillation des Doms und Anpresskraft nach dem Beenden der Drehbewegung des Doms sowie die Verfahrensdauer entsprechend den besonderen Eigenschaften der zu fügenden Bauteile im Einzelfall ermittelt und mit Hilfe von Versuchsreihen und/oder aufgrund von Erfahrungswerten festgelegt werden müssen.

In vielen Anwendungen ist es nicht erforderlich, die zu fügenden Bauteile vorher mit Löchern zu versehen, sondern der nicht aufgeschmolzene Kern des Doms bohrt sich die benötigten Löcher durch die zu fügenden Bauteile. Alternativ können die zu fügenden Bauteile auch vor dem Fügen gelocht werden.

Das erfindungsgemäße Verfahren hat darüber hinaus den Vorteil, dass eine relativ große Kontaktfläche beziehungsweise Schweißfläche zwischen den zu verbindenden Bauteilen und dem Dom entsteht. Die Größe dieser Kontaktfläche kann entsprechenden Anforderungen des Einzelfalls auf einfache Weise durch den Durchmesser der im ersten Verfahrensschritt hergestellten Löcher in weiten Grenzen variiert werden.

Wenn gemäß dem erfindungsgemäßen Verfahren beispielsweise ein Blech aus Metall und ein Bauteil aus einem faserverstärkten Kunststoff miteinander verbunden werden sollen, dann wird der Dom durch ein zuvor in das Blech eingefügtes Loch geführt. Anschließend dringt der rotierende oder oszillierende Dom in das Material des faserverstärkten Kunststoffs ein und bohrt sich ein Loch, so dass nach dem Herstellen der erfindungsgemäßen Reibschweißverbindung das Metallblech zwischen dem Kopf des Doms und dem Bauteil aus faserverstärktem Kunststoff gewissermaßen eingespannt ist. Auch bei dieser Materialkombination ist es möglich, dass vor dem Fügen in das Bauteil aus faserverstärktem Kunststoff ein Loch eingebracht wird.

Das erfindungsgemäße Verfahren kann auch eingesetzt werden, um einen Dom durch Reibschweißen mit einem Bauteil aus einem gefüllten Kunststoff zu verbinden. Dieser Dom kann dann als Befestigungspunkt für die Montage weiterer Bauteile zum Beispiel durch Schrauben dienen.

Es versteht sich von selbst, dass bei Bedarf mehrere erfindungsgemäße Reibschweißverbindungen zum Fügen von zwei oder mehr Bauteilen voneinander beabstandet vorgesehen werden können. In ähnlicher Weise werden beispielsweise Blechteile im Flugzeugbau durch eine oder mehrere Reihen von Nieten miteinander verbunden.

Um eine leistungsfähige erfindungsgemäße formschlüssige Verbindung zu erzeugen, ist es vorteilhaft, dass der Dom mindestens teilweise aus einem thermoplastischen Kunststoff besteht, wobei der Dom aus einem gefüllten Kunststoff, bevorzugt aus (glas-)faserverstärktem Polyamid oder Polypropylen besteht. Selbstverständlich ist diese Materialaufzählung nicht abschließend, sondern nur beispielhaft. Es versteht sich von selbst, dass eine Vielzahl von Kunststoffen, insbesondere von thermoplastischen Kunststoffen, mit oder ohne Füllstoffe für die Herstellung erfindungsgemäßer Dome eingesetzt werden kann.

Der Dom weist einen Kopf auf, wobei der Kopf in seinem Außendurchmesser größer ist als der Schaft des Doms. Dadurch wird erreicht, dass der Dom nur so weit in die Löcher der zu verbindenden Bauteile eindringen kann bis der Kopf des Doms auf dem ersten der beiden Bauteile aufliegt. Wenn der Dom in dieser Position angekommen ist, kann die Bewegung des Doms noch so lange fortgeführt werden, bis die Kontaktfläche zwischen dem Kopf des Doms und dem einen Bauteil durch Reibung soweit erwärmt ist, bis zumindest ein Teil des Kopfs erweicht und fließfähig wird. Wenn dann die Bewegung des Doms unterbrochen wird und der Dom mit seinem Kopf gegen die zu verbindenden Bauteile gepresst wird, ergibt sich auch an der Kontaktfläche zwischen Kopf und zu verbindendem Bauteil eine großflächige Reibschweißverbindung sowie eine Verschweißung der Lochrandflächen der zuvor eingebrachten Löcher oder der vom Dom beim Setzvorgang selbst erzeugten Löcher, welche die Belastbarkeit der erfindungsgemäßen Verbindung weiter erhöht.

Dies setzt voraus, dass das zu verbindende Bauteil, welches Kontakt zu dem Kopf des Doms hat, mit dem Material des Kopfs verschweißbar ist.

In einer vorteilhaften Ausgestaltung des Verfahrens wird mindestens eines der zu fügenden Bauteile vor dem Fügen gelocht. Ein sogenanntes Vorlochen kann vorteilhaft sein, wenn ein zu fügendes Bauteil bspw. aus Metall besteht oder eine harte Deckschicht, bspw. eine harte duroplastische Deckschicht aufweist. Bei einem solchen harten Material kann der Dom sich den Bauraum bei der Setzbewegung bzw. bei der rotatorischen, oszillierenden und/oder kreisenden Fügebewegung nicht selbst durch Aufschmelzen der zu verbindenden Bauteile erzeugen.

In einer vorteilhaften Ausgestaltung führt der erfindungsgemäße Dom aus Kunststoff rotatorische, oszillierende und/oder kreisende Fügebewegungen aus.

Damit der Dom rotatorisch antreibbar ist und das zum Aufschmelzen erforderliche Drehmoment übertragen kann, ist in bevorzugter Ausgestaltung der Kopf des Doms zur Aufnahme in einer Antriebsvorrichtung und/oder zur Übertragung von Drehmomenten ausgebildet. Dies kann beispielsweise durch einen herkömmlichen Innensechskant, eine Innenvielzahnverbindung oder auch eine entsprechend gestaltete Außenkontur des Kopfs beispielsweise in der Art eines Polygons oder eines Sechskants erfolgen.

Ein wichtiger Aspekt bei der Gestaltung des Kopfes ist die Drehmomentübertragung und das Einspannen des Doms in einer Antriebseinheit einer Reibschweißvorrichtung.

Denkbar wäre auch eine Ausgestaltung des Domes ohne Kopf oder mit einem Senkkopf, das heißt ohne Randüberstand, der in bestimmten Anwendungen als versenktes Element eingesetzt werden kann.

In weiterer vorteilhafter Ausgestaltung des erfindungsgemäßen Doms weist dieser eine zentrale Axialbohrung auf, die entweder als Sacklochbohrung oder als Durchgangsbohrung ausgeführt sein kann. Mit Hilfe dieser Axialbohrung ist es einfach möglich, den Dom koaxial zu einer Drehachse der Antriebsvorrichtung auszurichten und in die gegebenenfalls vorgelochten Löcher der zu verbindenden Bauteile einzuführen. Nach dem Herstellen der erfindungsgemäßen Reibschweißverbindung kann die Axialbohrung auch bspw. zum Einschrauben einer (Metall-)Schraube, eines Bolzens und/oder eines Hakens in den thermoplastischen Kunststoff des Doms genutzt werden. Dies bedeutet, dass an dem Kopf oder auch an dem dem Kopf entgegensetzten Ende des Doms weitere Bauteile in herkömmlicher Weise durch Schrauben und/oder Einstecken befestigt werden können.

Wenn die Axialbohrung als Durchgangsbohrung ausgebildet ist, können herkömmliche Zylinderschrauben durch diese Axialbohrung gesteckt werden und dann ohne Weiteres diese Schrauben mit entsprechenden Muttern und bevorzugt mit Unterlegscheiben aus einem nicht-metallischen Werkstoff, eingesetzt werden. Des Weiteren ist es möglich, den Dom als Tubus für den Einsatz einer selbstfurchenden Schraube oder eines geeigneten Doppelbolzens zu verwenden. Die relativ große Wandstärke des Doms verhindert sicher einen Kontakt zwischen der metallischen Schraube und dem Graphit in den Karbonfasern oder den anderen Füllstoffen der zu verbindenden Bauteile, so dass keine Kontaktkorrosion auftritt.

Damit die erfindungsgemäße Reibschweißverbindung fest und belastbar wird, ist in vorteilhafter Ausgestaltung des Doms vorgesehen, dass dieser einen kegelstumpfförmigen Schaft aufweist, wobei der Durchmesser des Schafts am Kopf größer ist als an dem dem Kopf abgewandten Ende des Schafts. In diesem Fall ist es möglich, den Dom mit seinem dünneren Ende in die gegebenenfalls vorgelochten Löcher der zu verbindenden Bauteile einzuführen und unter Rotation soweit in die Löcher der zu verbindenden Bauteile zu pressen, bis der Kopf des Doms an dem ersten zu verbindenden Bauteil aufliegt und dort mit diesem verschweißt ist.

Um ein gutes Zentrieren beziehungsweise Einführen des Doms in die gegebenenfalls vorgelochten Löcher der zu verbindenden Bauteile zu gewährleisten, hat der Schaft an einem dem Kopf abgewandten Ende einen Durchmesser, der im Wesentlichen gleich oder geringfügig kleiner als der Durchmesser der Löcher in den zu verbindenden Bauteilen ist.

Es hat sich weiter als vorteilhaft erwiesen, wenn der Dom einen Füllstoffanteil von 10 bis 50 Gewichtsprozenten, besonders bevorzugt von 30 Gewichtsprozenten aufweist. Dann hat der Dom eine große mechanische Festigkeit bei gleichzeitig guter Eignung zum Reibschweißen.

Die durch das erfindungsgemäße Verfahren und die erfindungsgemäßen Dome realisierbaren Vorteile führen zu einer Baugruppe gemäß dem nebengeordneten Anspruch 5, wobei diese Baugruppe mindestens zwei Bauteile umfasst, von denen mindestens ein Bauteil aus einem faserverstärkten Kunststoff besteht, bei dem mindestens zwei Bauteile durch einen oder mehrere Dome aus einem gefüllten Kunststoff, bevorzugt aus glasfaserverstärktem Polyamid oder Polypropylen, durch das erfindungsgemäße Füge-Verfahren gefügt sind.

Dabei ist vorgesehen, dass mindestens das Bauteil, das an dem Kopf des Doms abgewandt angeordnet ist, aus einem faserverstärkten Kunststoff besteht. Dann nämlich ist es möglich, mithilfe des erfindungsgemäßen Doms aus Kunststoff die Bauteile in der zuvor beschriebenen Weise miteinander zu fügen.

Idealerweise hat das mindestens eine der zu fügenden Bauteile aus faserverstärktem Kunststoff eine Matrix aus einem thermoplastischen Material, so dass durch die Reibung zwischen Bauteil und Dom nicht nur das Material des Doms teilweise in den fließfähigen Zustand übergeführt wird, sondern auch die Matrix des mindestens einen Bauteils aus faserverstärktem Kunststoff erwärmt und in den fließfähigen Zustand übergeführt wird. Dadurch kann die Festigkeit der Verbindung zwischen dem Dom und diesem Bauteil noch weiter erhöht werden. Des Weiteren ist es durch den Dom aus einem fließfähigen Material möglich, Werkstoffe mit duroplastischer oder elastomerer Matrix mit dieser Methode zu verschweißen.

Als Füllstoffe kommen alle bekannten anorganischen Füllstoffe in unterschiedlicher Form, wie z. Bsp. in Fasern, wie Glasfasern, Basaltfasern, Borfasern, Keramikfasern, Kieselsäurefasern, metallische Verstärkungsfasern und organische Füllstoffe in unterschiedlicher Form, wie bspw. als Verstärkungsfasern, wie Aramidfasern, Kohlenstofffasern, Polyester-Fasern, Nylon-Fasern, Polyethylen-Fasern oder Plexiglas-Fasern (Polymethylmethacrylat-Fasern), sowohl für die zu verbindenden Bauteile als auch für die Dome in Betracht.

Weitere Vorteile und vorteilhafte Ausgestaltungen der Erfindung sind in den nachfolgenden Zeichnungen, deren Beschreibungen und den Patentansprüchen entnehmbar.

Es zeigen
Figuren 1 und 2 zwei Ausführungsbeispiele der erfindungsgemäßer Dome,
Figur 3 zwei miteinander zu verbindende Bauteile mit bereits eingebrachten Löchern,
Figuren 4 bis 6 verschiedene Ausführungsbeispiele des erfindungsgemäßen Verfahrens zum Fügen der in Figur 3 dargestellten Bauteile in verschiedene Stadien,
Figur 7 das erfindungsgemäße Verfahren zum Fügen in seinem zeitlichen Ablauf,
Figuren 8 und 9 weitere Ausführungsbeispiele des erfindungsgemäßen Füge-Verfahrens.

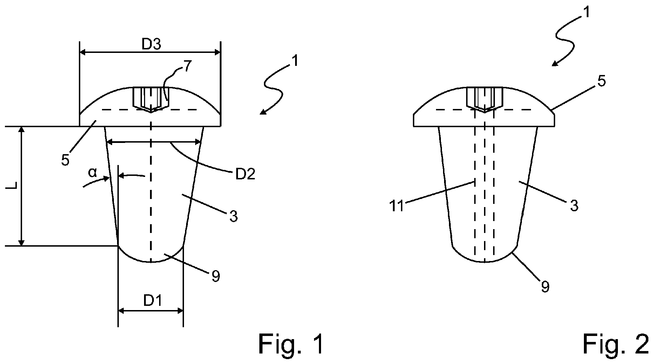

In der Figur 1 ist ein in seiner Gesamtheit mit dem Bezugszeichen 1 versehener Dom dargestellt. Der Dom 1 umfasst einen Schaft 3, der kegelstumpfförmig ausgebildet ist und einen Kopf 5. Ein dem Kopf 5 entgegengesetztes Ende des Schafts 3 weist einen Durchmesser D₁ auf, der kleiner ist als ein Durchmesser D₂ des Schafts 3 in unmittelbarer Nähe des Kopfs 5. Der Durchmesser D₃ des Kopfs 5 wiederum ist größer als der Durchmesser D₂ des Schafts 3.

Im Kopf 5 ist angedeutet dargestellt ein Innensechskant 7, der dazu dienen kann, den Dom 1 in einer Antriebsvorrichtung einer Reibschweißmaschine (nicht dargestellt) aufzunehmen. Selbstverständlich sind auch andere Arten der Drehmomentübertragung zwischen einer Antriebsvorrichtung und dem Dom 1 möglich. So kann beispielsweise der Kopf 5 als Außensechskant oder Polygon ausgestalten sein und auf diese Weise das zum Reibschweißen erforderliche Drehmoment auf den Dom 1 übertragen werden.

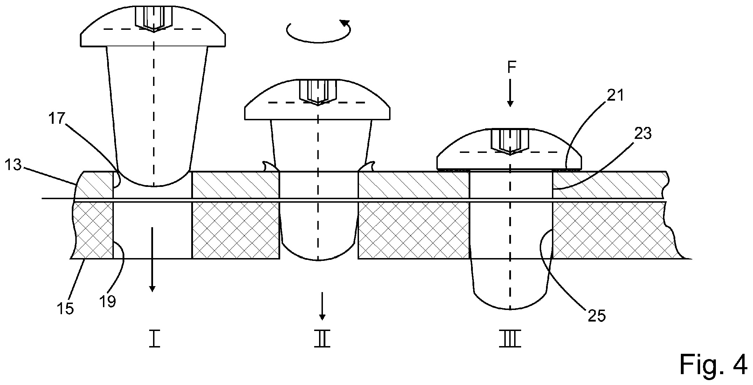

Der Schaft 3 ist bevorzugt kegelig ausgeführt, weil dadurch gewissermaßen konstruktiv festgelegt wird, wieviel Material des Schafts 3 beim erfindungsgemäßen Fügen erwärmt und aufgeschmolzen wird (Schweißzugabe). Es handelt sich dabei um den kegelstumpfförmigen Teil des Schafts 3, wie sich aus der Figur 4 ergibt.

Über die Länge L des Schafts 3 und den Kegelwinkel α kann die Schweißzugabe konstruktiv in sehr weiten Grenzen den Anforderungen des Anwendungsfalls entsprechend festgelegt werden.

An einem dem Kopf 5 gegenüberliegenden Ende 9 des Schafts 3 ist der Schaft 3 kalottenförmig oder auf anderer Weise so ausgestaltet, dass er sich gut in einem vorgebohrten Loch 17, 19 der zu fügenden Bauteile zentriert.

Wenn in den zu fügenden Bauteilen keine vorgebohrten Löcher vorhanden sind, dann ist das Ende 9 des Schafts 3 bevorzugt so ausgestaltet, dass der Schaft 3 die Löcher in die Bauteile "bohrt" oder einbringt.

In der Figur 2 ist ein weiteres Ausführungsbeispiel eines erfindungsgemäßen Doms 1 dargestellt. Gleiche Bauteile werden mit den gleichen Bezugszeichen versehen und es gilt das bezüglich der anderen Figuren Gesagte entsprechend.

Der wesentliche Unterschied zwischen dem Dom 1 gemäß Figur 2 und dem ersten Ausführungsbeispiel gemäß Figur 1 besteht darin, dass der Dom 1 gemäß Figur 2 eine Axialbohrung 11 aufweist, die in vorliegendem Fall als Durchgangsbohrung ausgebildet ist.

Es versteht sich von selbst, dass auch die Axialbohrung 11 als Sackbohrung ausgebildet sein kann (nicht dargestellt). Beispielsweise wenn Gase oder Flüssigkeiten nicht durch den Dom 1 hindurch strömen sollen. Dabei ist es möglich, dass die Axialbohrung 11 als Sackloch beginnend an dem Ende 9 des Schafts 3 ausgebildet ist oder die Axialbohrung im Kopf 5 des Doms 1 beginnt und vor dem Ende 9 endet.

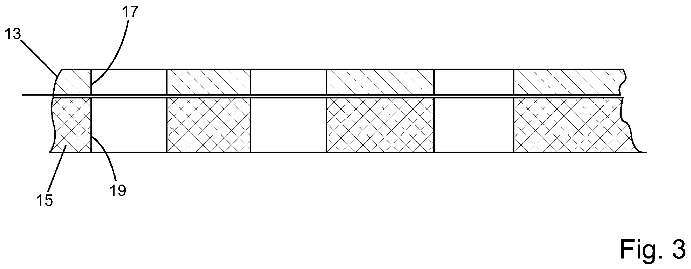

In der Figur 3 sind exemplarisch ein erstes Bauteil 13 und ein zweites Bauteil 15 geschnitten dargestellt. Das erste Bauteil 13 kann beispielsweise ein Blech aus einem metallischen Werkstoff sein, während das zweite Bauteil 15 aus einem Faserverbundwerkstoff, zum Beispiel mit Karbonfasern und einer thermoplastischen Matrix, besteht. Aus Gründen der vereinfachten Darstellung sind die beiden Bauteile 13 als plattenförmige Bauteile dargestellt, die mehrere voneinander beabstandete Löcher 17 und 19 aufweisen, die in die Bauteile 13, 15 in einem vorgelagerten optionalen Verfahrensschritt eingebracht werden können.

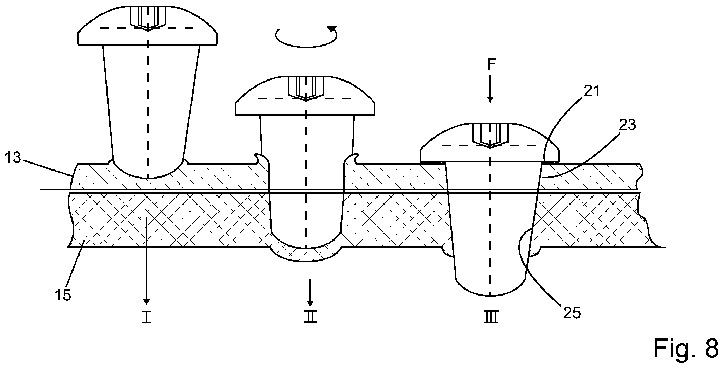

Alternativ ist es auch möglich, dass die Bauteile 13, 15 ohne Löcher in der gewünschten Position übereinander gelegt werden (siehe Figur 8).

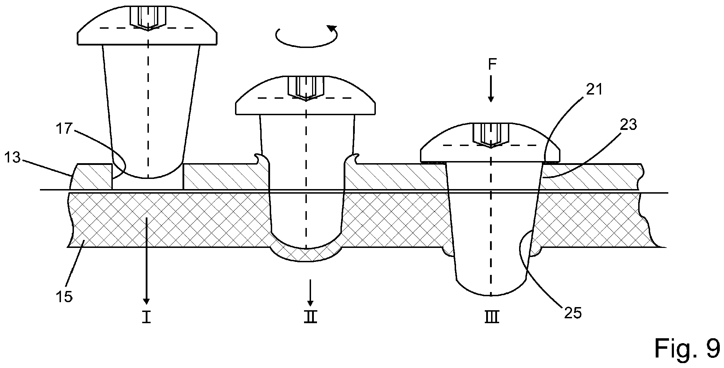

Es ist auch möglich, dass nur eines der Bauteile 13, 15 vorgelocht wird und beide Bauteile vor dem Fügen in der gewünschten Position übereinander gelegt werden (siehe Figur 9).

Dann beginnt der erfindungsgemäße Fügevorgang indem der Dom in Rotation und/oder Oszillation versetzt wird. Gleichzeitig dringt er in die Bauteile 13, 15 ein und schafft dadurch die Löcher beziehungsweise das erforderliche Loch.

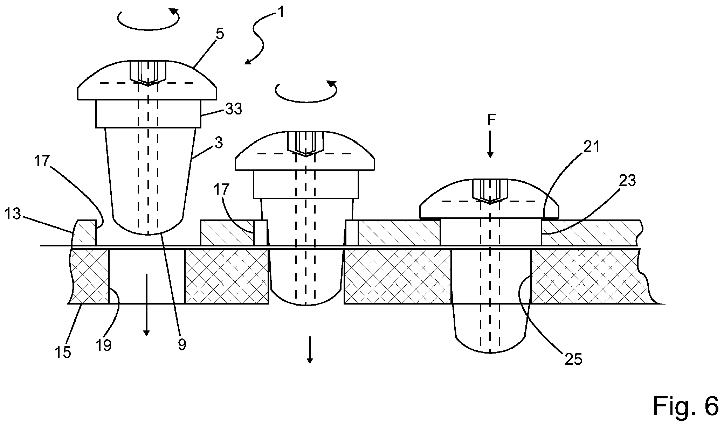

Die Mittelpunkte der Löcher 17 und 19 der beiden Bauteile 13 und 15 sind deckungsgleich. In dem dargestellten Ausführungsbeispiel sind auch die Durchmesser der Löcher 17 und 19 gleich. Dies muss nicht zwingend so sein. Es ist auch möglich, dass die Löcher unterschiedliche Durchmesser haben und dementsprechend der Dom 3 einen gestuften Schaft aufweist. Diese Variante ist in der Figur 6 noch im Detail dargestellt.

In vielen Anwendungsfällen ist auch es nicht ausreichend, die beiden Bauteile 13 und 15 mit nur einem Dom 1 zu verbinden, sondern es werden, ähnlich einer Reihe von Nieten, mehrere erfindungsgemäße Reibschweißverbindungen beabstandet voneinander angebracht, um eine ausreichende Festigkeit zu erzielen.

In der Figur 4 ist nur der Fügevorgang exemplarisch in drei Stadien I, II und III dargestellt. Beginnend in Figur 4 auf der linken Seite wird der Dom 1 über den bereits zuvor eingebrachten Löchern 17 und 19 zentriert (I in Figur 4) und anschließend in Rotation versetzt und rotierend gleichzeitig in Figur 4 nach unten zunächst durch das Loch 17 des ersten Bauteils 13 und anschließend durch das Loch 19 des zweiten Bauteils 15 gepresst.

In der Mitte der Figur 4 ist dieses Zwischenstadium (II in Figur 4) des Fügevorganges dargestellt. Dabei wird deutlich, dass der kegelstumpfförmige Teil des Schafts 3 durch die Drehbewegung und die durch entstehende Reibung zwischen dem Schaft und den Löchern 17 beziehungsweise 19 aufgeweicht und teilweise abgetragen wird, bis er eine zylindrische Form hat, deren Durchmesser dem Durchmesser der Löcher 17 und 19 entspricht. Sobald der Kopf 5 des Doms 1 das erste Bauteil 13 an seiner Oberfläche berührt, entsteht auch an der ringförmigen Kontaktfläche zwischen dem Kopf 5 und dem Bauteil 13 Reibung und entsprechend schmilzt zumindest der untere Teil des Kopfs 5 und wird fließfähig. Danach wird die Drehung des Doms beendet und die so genannte Stauchphase (III in Figur 4) eingeleitet. Dieser Zustand ist in Figur 4 ganz rechts dargestellt. In diesem Zustand wird lediglich eine Kraft F, die in axialer Richtung auf den Kopf 5 des Doms 1 wirkt, auf den Dom 1 ausgeübt, so dass sich die untere Seite des Kopfs 5 mit dem ersten Bauteil 13 bestmöglich verbindet.

Wenn das erste Bauteil 13 aus einem faserverstärkten Kunststoff idealerweise mit einer thermoplastischen Matrix besteht, dann ergibt sich dort eine kreisringförmige erste Fügefläche 21, die aufgrund ihrer geometrischen Abmessung relativ große Kräfte übertragen kann. Zwischen der Bohrung 17 des ersten Bauteils 13 und dem Schaft 3 des Doms 1 entsteht eine kreiszylindrische zweite Fügefläche 23 und zwischen der Bohrung 19 des zweiten Bauteils 15 entsteht eine weitere dritte Fügefläche 25, die ebenfalls kreiszylindrisch ist.

Schon die Aufzählung der drei Fügeflächen 21, 23 und 25 sowie deren Größe macht deutlich, dass mit dem erfindungsgemäßen Verfahren eine sehr intensive und belastbare Verbindung zwischen Dom 1, erstem Bauteil 13 sowie Dom 1 und zweitem Bauteil 15 erzielt werden kann. Weil der Dom 1 mit seinem Schaft 3 über ausreichende Wandstärken und eine ausreichende Festigkeit verfügt, können somit hohe Kräfte zwischen dem ersten Bauteil 13 und dem zweiten Bauteil 15 über den Dom 1 übertragen werden.

Es ist auch denkbar, die beiden Bauteile 13, 15 durch den Dom 1 zu fügen, ohne zuvor die Löcher 17, 19 in die Bauteile einzubringen. Dabei ist es möglich, dass der Dom 1 sich den notwendigen Bauraum selbst erzeugt, indem er die Bauteile 13, 15 bspw. bereichsweise aufschmilzt wenn er rotatorisch oder oszillierend angetrieben wird. Diese Situation ist in der Figur 8 schematisch dargestellt. In dem mit "II" bezeichneten Stadium ist gut zu erkennen, wie der Dom 1 das Material der Bauteile 13 und 15 teilweise verdrängt hat, um Platz zu schaffen.

In dem mit "III" bezeichneten Stadium ist an der Unterseite des Bauteils 15 ein Wulst (ohne Bezugszeichen) zu sehen, der sich um den Dom 1 erstreckt und sich mit diesem verbindet. Wenn die Bauteile 13 und 15 nicht vorgelocht sind, entfallen diese Herstellungsschritte und die Verbindung zwischen den Bauteilen 13 und 15 wird besonders fest, weil der nicht aufgeschmolzene Kern des Doms 1 eine formschlüssige Verbindung bildet, während die aufgeschmolzenen und anschließend wieder erstarrten Bereiche eine stoffschlüssige Verbindung eingehen.

In der Figur 9 ist das erfindungsgemäße Füge-Verfahren am Beispiel eines vorgelochten Bauteils 13 und eines nicht vorgelochten Bauteils 15 schematisch dargestellt. In dem mit "II" bezeichneten Stadium ist gut zu erkennen, wie der Dom 1 das Material der Bauteile 13 und 15 teilweise verdrängt hat, um Platz zu schaffen.

Dennoch kann es vorteilhaft sein, die Bauteile 13, 15 vor dem Fügen zu Lochen und die Löcher 17, 19 vor dem Fügen einzubringen. Der vorgelagerte Schritt des Lochens bzw. des Einbringens der Löcher 17, 19 kann insbesondere bei metallischen Bauteilen oder bei Bauteilen 13, 15 mit einer harten Deckschicht, bspw. einer duroplastischen Deckschicht erforderlich sein.

Auch wenn das erste Bauteil 13 aus Metall besteht, entsteht eine sehr leistungsfähige Fügeverbindung. Allerdings entfallen dann die Fügeflächen 21 und 23, weil das aufgeschmolzene thermoplastische Material des Doms 1 sich nicht mit einem Metall des ersten Bauteils 13 stoffschlüssig verbindet.

Allerdings entsteht dann eine kraftschlüssige Verbindung zwischen dem Kopf 5 und dem zweiten Bauteil 15, so dass ähnlich einer Niet- oder einer Schraubverbindung eine sichere Verbindung zwischen den Bauteilen 13 und 15 mit nur einer stoffschlüssigen Fügefläche 25 entsteht.

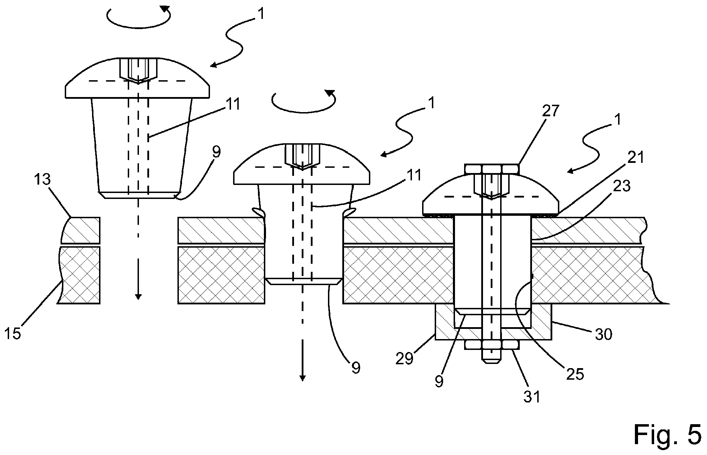

Wenn eine solche Verbindung besonders hohen Belastungen ausgesetzt werden soll, kann es vorteilhaft sein, eine durchgängige Axialbohrung 11 in dem Dom 1 vorzusehen und in dieser Axialbohrung 11 eine Schraube mit entsprechender Mutter und einer Unterlegscheibe vorzusehen. In der Figur 5 ist ein solches Ausführungsbeispiel sehr vereinfacht und schematisch dargestellt. Im rechten Teil der Figur 5 ist eine Schraube 27 durch den erfindungsgemäßen Dom 1 beziehungsweise dessen Axialbohrung 11 und eine Unterlegscheibe 29 gesteckt und mit einer Mutter 31 verschraubt. Die Unterlegscheibe 29 hat einen umlaufenden Bund 30, der dafür sorgt, dass die Unterlegscheibe 29 an dem zweiten Bauteil 15 aufliegt und nicht am Ende 9 des Doms 1. Bei diesem Ausführungsbeispiel ist eine extrem belastbare Verbindung auch bei schwieriger Materialkonstellationen/Materialpaarung sicher und zuverlässig möglich, wobei an der Schraube 27 und Mutter 31 keine Kontaktkorrosion auftritt.

In der Figur 6 ist ein weiteres Ausführungsbeispiel einer erfindungsgemäßen Baugruppe beziehungsweise des erfindungsgemäßen Verfahrens dargestellt, bei dem die Löcher 17 und 19 unterschiedliche Durchmesser aufweisen. Entsprechend ist der Dom 1 gestuft ausgebildet. Ein Absatz 33 des Schafts 3 ist in seinem Durchmesser auf dem Durchmesser des Lochs 17 des ersten Bauteils abgestimmt, während der andere Teil des Schafts 3 auf dem Durchmesser des Lochs 19 des zweiten Bauteils abgestimmt ist. Dadurch ist es beispielsweise möglich, die Fügefläche 23 zu vergrößern. Es versteht sich von selbst, dass diese Ausführungsform funktioniert, wenn das erste Bauteil aus einem faserverstärkten Verbundwerkstoff oder einem metallischen Werkstoff besteht.

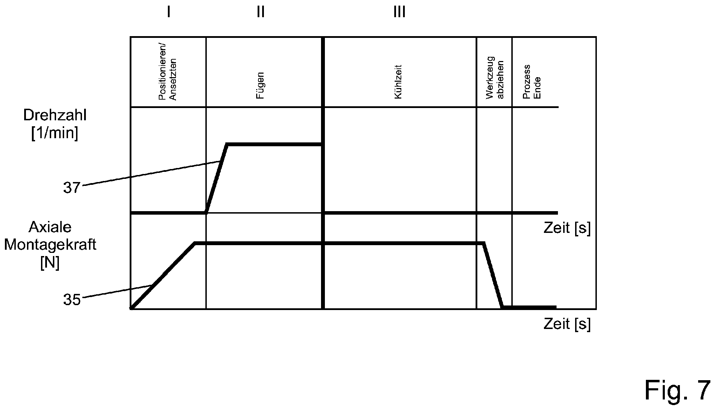

In der Figur 7 sind mögliche zeitliche Abläufe des erfindungsgemäßen Verfahrens in Diagrammform schematisch dargestellt. Auf der Abszisse ist die Zeit aufgetragen.

Eine erste Linie 35 stellt qualitativ den zeitlichen Verlauf der auf den Dom 1 ausgeübten Axialkraft dar.

Eine zweite Linie 37 stellt qualitativ den zeitlichen Verlauf der Drehzahl des Doms 1 dar.

Die verschiedenen Verfahrensschritte sind mit den Ziffern I, II und III entsprechend der Figur 4 angedeutet.

## Patentansprüche

1. Verfahren zum Fügen von mindestens zwei Bauteilen (13, 15), wobei mindestens ein Bauteil (13) aus einem faserverstärkten Kunststoff besteht, **gekennzeichnet durch** Fügen der mindestens zwei Bauteile (13, 15) zu einer formschlüssigen Verbindung indem ein Kopf (5) eines Doms (1) aus einem gefüllten Kunststoff, bevorzugt aus glasfaserverstärktem Polyamid oder Polypropylen, in Rotation, Oszillation und/oder eine kreisende Bewegung versetzt wird und ein Schaft (3) des Doms (1) unter Aufbringung einer Axialkraft in die zu verbindenden Bauteile (13, 15) eingebracht wird, wobei der Kopf in seinem Außendurchmesser größer ist als der Schaft des Doms.

2. Verfahren nach Anspruch 1, **dadurch gekennzeichnet, dass** mindestens eines der zu fügenden Bauteile (13, 15) vor dem Fügen gelocht wird.

3. Verfahren nach Anspruch 1 oder 2, **dadurch gekennzeichnet, dass** die Rotation, Oszillation und/oder kreisende Bewegung des Doms (1) beendet wird und anschließend der Dom (1) in axialer Richtung gegen die zu verbindenden Bauteile (13, 15) gepresst wird.

4. Verfahren nach einem der vorhergehenden Ansprüche, **dadurch gekennzeichnet, dass** Drehzahl, Material des Doms (1), Materialzugabe am Dom (1), Dauer des Füge-Vorgangs (II) und/oder Dauer des Pressvorgangs (III) in Abhängigkeit von den zu verbindenden Bauteilen (13, 15) gewählt wird.

5. Baugruppe umfassend mindestens zwei Bauteile (13, 15), wobei mindestens ein Bauteil (15) aus einem faserverstärkten Kunststoff besteht, **dadurch gekennzeichnet, dass** die mindestens zwei Bauteile (13, 15) durch einen oder mehrere Dome (1) aus einem gefüllten Kunststoff, bevorzugt aus glasfaserverstärktem Polyamid oder Polypropylen, durch ein Verfahren nach einem der Ansprüche 1 bis 4 gefügt sind.

6. Baugruppe nach Anspruch 5, **dadurch gekennzeichnet, dass** mindestens das Bauteil (13), welches dem Kopf (5) des Doms (1) abgewandt angeordnet ist, aus einem faserverstärkten Kunststoff besteht.

7. Baugruppe nach einem der Ansprüche 5 oder 6, **dadurch gekennzeichnet, dass** der faserverstärkte Kunststoff eine thermoplastische oder duroplastische Matrix und/oder Fasern aus Kohlenstoff, Glas und/oder Aramid enthält.

8. Baugruppe nach einem der Ansprüche 5 bis 7, **dadurch gekennzeichnet, dass** der Dom (1) mindestens teilweise aus einem thermoplastischen Kunststoff besteht wobei der Kopf (5) aus einem gefüllten Kunststoff, bevorzugt aus glasfaserverstärktem Polyamid oder Polypropylen, besteht.

9. Baugruppe nach einem der Ansprüche 5 bis 8, **dadurch gekennzeichnet, dass** der Kopf (5) des Doms (1) zur Aufnahme in einer Antriebsvorrichtung und/oder zur Übertragung von Drehmomenten ausgebildet ist.

10. Baugruppe nach einem der Ansprüche 5 bis 9, **dadurch gekennzeichnet, dass** der Dom (1) eine zentrale Axialbohrung (11) aufweist.

11. Baugruppe nach einem der Ansprüche 5 bis 10,Dom (1) nach einem der Ansprüche 5 bis 7, **dadurch gekennzeichnet, dass** der Dom (1) einen kegelstumpfförmigen Schaft (3), aufweist.

12. Baugruppe nach einem der Ansprüche 5 bis 11, **dadurch gekennzeichnet, dass** der Schaft (3) an seinem dem Kopf (5) abgewandten Ende einen Durchmesser (D₁) aufweist, der im Wesentlichen gleich dem Durchmesser der Löcher (17, 19) in den zu verbindenden Bauteilen (13, 15) ist.

13. Baugruppe nach einem der Ansprüche 5 bis 12, **dadurch gekennzeichnet, dass** der Dom (1) einen Füllstoffanteil von 10 bis 50 Gewicht-%, besonders bevorzugt von 30 Gewicht-%, aufweist.

## Claims

1. Method for joining at least two components (13, 15), at least one component (13) consisting of a fibre-reinforced plastic, **characterized by** joining the at least two components (13, 15) to form a form-fitting connection by a head (5) of a dome (1) consisting of a filled plastic, preferably of glass fibre-reinforced polyamide or polypropylene, is set in rotation, oscillation and/or a circular movement, and a shaft (3) of the dome (1) is introduced into the components (13, 15) to be connected by applying an axial force, the head in its outer diameter being bigger than the shaft of the dome.

2. Method according to claim 1, **characterized in that** at least one of the components (13, 15) to be joined is perforated before joining.

3. Method according to claim 1 or 2, **characterized in that** the rotation, oscillation and/or circular movement of the dome (1) is terminated and the dome (1) is then pressed in the axial direction against the components (13, 15) to be joined.

4. Method according to one of the preceding claims, **characterized in that** speed, material of the dome (1), addition of material to the dome (1), duration of the joining operation (II) and/or duration of the pressing operation (III) are selected as a function of the components (13, 15) to be joined.

5. Assembly comprising at least two components (13, 15), at least one component (15) consisting of a fibre-reinforced plastic, **characterized in that** the at least two components (13, 15) are joined by one or more domes (1) of a filled plastic, preferably of glass-fibre-reinforced polyamide or polypropylene, by a method according to one of claims 1 to 4.

6. Assembly according to claim 5, **characterized in that** at least the component (13), which is arranged facing away from the head (5) of the dome (1), consists of a fibre-reinforced plastic.

7. Assembly according to one of claims 5 or 6, **characterized in that** the fibre-reinforced plastic contains a thermoplastic or thermosetting matrix and/or fibres of carbon, glass and/or aramide.

8. Assembly according to one of claims 5 to 7, **characterized in that** the dome (1) consists at least partially of a thermoplastic synthetic material, the head (5) consisting of a filled synthetic material, preferably of glass fibre-reinforced polyamide or polypropylene.

9. Assembly according to one of claims 5 to 8, **characterized in that** the head (5) of the dome (1) is designed to be accommodated in a drive device and/or to transmit torques.

10. Assembly according to one of claims 5 to 9, **characterized in that** the dome (1) has a central axial bore (11).

11. Assembly according to one of the claims 5 to 10, dome (1) according to one of the claims 5 to 7, **characterized in that** the dome (1) has a frustoconical shaft (3).

12. Assembly according to one of the claims 5 to 11, **characterized in that** the shaft (3) at its end remote from the head (5) has a diameter (D1) which is substantially equal to the diameter of the holes (17, 19) in the components (13, 15) to be connected.

13. Assembly according to one of claims 5 to 12, **characterized in that** the dome (1) has a filler content of 10 to 50% by weight, particularly preferably of 30% by weight.

## Revendications

1. Procédé d'assemblage d'au moins deux composants (13, 15), dans lequel au moins un composant (13) est constitué d'une matière plastique renforcée de fibres, **caractérisé par** l'étape consistant à assembler les au moins deux composants (13, 15) afin de créer une liaison par complémentarité de forme en mettant en rotation, en oscillation et/ou en mouvement circulaire une tête (5) d'un dôme (1) en matière plastique chargée, de manière préférée en polyamide ou polypropylène renforcé de fibres de verre, et en introduisant un fût (3) du dôme (1) avec application d'une force axiale au sein des composants (13, 15), dans lequel le diamètre extérieur de la tête est supérieur à celui du fût du dôme.

2. Procédé selon la revendication 1, **caractérisé en ce qu'**au moins un des composants (13, 15) à assembler est perforé avant l'assemblage.

3. Procédé selon la revendication 1 ou 2, **caractérisé en ce qu'**il est mis fin à la rotation, à l'oscillation et/ou au mouvement circulaire du dôme (1) et le dôme (1) est ensuite pressé dans le sens axial contre les composants (13, 15) à relier.

4. Procédé selon l'une quelconque des revendications précédentes, **caractérisé en ce que** la vitesse de rotation, le matériau du dôme (1), l'ajout de matériau au dôme (1), la durée de l'étape d'assemblage (II) et/ou la durée de l'étape de pressage (III) sont choisis en fonction des composants (13, 15) à relier.

5. Module comprenant au moins deux composants (13, 15), dans lequel au moins un composant (15) est constitué d'une matière plastique renforcée de fibres, **caractérisé en ce que** les au moins deux composants (13, 15) sont assemblés grâce à un procédé selon l'une quelconque des revendications 1 à 4 grâce à un ou plusieurs dômes (1) en matière plastique chargée, de manière préférée en polyamide ou polypropylène renforcé de fibres de verre.

6. Module selon la revendication 5, **caractérisé en ce qu'**au moins le composant (13) agencé de manière détournée de la tête (5) du dôme (1) est constitué d'une matière plastique renforcée de fibres.

7. Module selon la revendication 5 ou 6, **caractérisé en ce que** la matière plastique renforcée de fibres contient une matrice thermoplastique ou thermodurcissable et/ou des fibres de carbone, verre et/ou aramide.

8. Module selon l'une quelconque des revendications 5 à 7, **caractérisé en ce que** le dôme (1) est constitué au moins partiellement d'une matière plastique thermoplastique, dans lequel la tête (5) est constituée d'une matière plastique chargée, de manière préférée de polyamide ou polypropylène renforcé de fibre de verre.

9. Module selon l'une quelconque des revendications 5 à 8, **caractérisé en ce que** la tête (5) du dôme (1) est conçue pour être accueillie dans un dispositif d'entraînement et/ou pour transmettre des couples de rotation.

10. Module selon l'une quelconque des revendications 5 à 9, **caractérisé en ce que** le dôme (1) présente un alésage axial (11) central.

11. Module selon l'une quelconque des revendications 5 à 10, dôme (1) selon l'une quelconque des revendications 5 à 7, **caractérisés en ce que** le dôme (1) présente un fût (3) tronconique.

12. Module selon l'une quelconque des revendications 5 à 11, **caractérisé en ce que** le fût (3) présente au niveau de son extrémité détournée de la tête (5) un diamètre (D₁) qui est essentiellement égal au diamètre des trous (17, 19) présents dans les composants (13, 15) à relier.

13. Module selon l'une quelconque des revendications 5 à 12, **caractérisé en ce que** le dôme (1) présente une teneur en charge comprise entre 10 et 50 % en poids, de manière particulièrement préférée de 30 % en poids.
